# EUROPEAN PATENT SPECIFICATION

(11) **EP 1 187 856 B1**
(45) Date of publication and mention of the grant of the patent: **10.09.2003**
(21) Application number: 00919456.4
(22) Date of filing: 17.03.2000
(51) Int. Cl.: C08F 10/00, C08F 4/60, C07F 5/00, C07F 7/00, C07F 9/00, C07F 11/00, C07F 13/00, C07F 15/00

(54) **TRANSITION METAL COMPLEXES AND OLEFIN POLYMERIZATION PROCESS**
ÜBERGANGSMETALLKOMPLEXE UND OLEFIN-POLYMERISATIONSVERFAHREN
COMPLEXES DE METAUX DE TRANSITION, ET PROCEDE DE POLYMERISATION D'OLEFINES

(30) Priority: 14.05.1999 US 134336 P
(43) Date of publication of application: 20.03.2002
(73) Proprietor: Dow Global Technologies Inc., Midland, Michigan 48674 (US)
(72) Inventor: DEVORE, David, D., Midland, MI 48642 (US); FENG, Shaoguang, S., Midland, MI 48640 (US); FRAZIER, Kevin, A., Midland, MI 48642 (US); PATTON, Jasson, T., Midland, MI 48642 (US)
(74) Representative: Burford, Anthony Frederick
(86) International application number: US0007164
(87) International publication number: WO00069923

(56) References cited:
- WO-A-98/27124
- WO-A-98/30612
- WO-A-99/02472
- WO-A-99/12981
- PELLECCHIA C ET AL: "ISOTACTIC-SPECIFIC POLYMERIZATION OF PROPENE WITH AN IRON-BASED CATALYST: POLYMER AND GROUPS AND REGIOCHEMISTRY OF PROPAGATION" MACROMOLECULAR: RAPID COMMUNICATIONS,DE,WILEY VCH, WEINHEIM, vol. 19, no. 12, December 1998 (1998-12), pages 651-655, XP000803762 ISSN: 1022-1336
- SMALL B L ET AL: "POLYMERIZATION OF PROPYLENE BY A NEW GENERATION OF IRON CATALYSTS: MECHANISMS OF CHAIN INITIATION. PROPAGATION, AND TERMINATION" MACROMOLECULES,US,AMERICAN CHEMICAL SOCIETY. EASTON, vol. 32, no. 7, 6 April 1999 (1999-04-06), pages 2120-2130, XP000823810 ISSN: 0024-9297
- B L SMALL ET AL: "HIghly Active Iron and Cobalt Catalysts for the Polymerization of Ethylene" JOURNAL OF THE AMERICAN CHEMICAL SOCIETY,US,AMERICAN CHEMICAL SOCIETY, WASHINGTON, DC, vol. 120, no. 16, 29 April 1998 (1998-04-29), pages 4049-4050-4050, XP002119954 ISSN: 0002-7863 cited in the application
- CHEMICAL ABSTRACTS, vol. 128, no. 12, 23 March 1998 (1998-03-23) Columbus, Ohio, US; abstract no. 141174, SUZUKI, YASUHIKO ET AL: "Selective preparation of.alpha.-olefin oligomers especially for forming 1-hexene from ethylene" XP002141498 & JP 10 007712 A (MITSUI PETROCHEMICAL INDUSTRIES, LTD., JAPAN) 13 January 1998 (1998-01-13)
- BIRTOVSEK ET AL: "Novel olefin polymerization catalysts based on iron and cobalt" CHEMICAL COMMUNICATIONS,GB,ROYAL SOCIETY OF CHEMISTRY, no. 7, 1 January 1998 (1998-01-01), pages 849-850, XP002086893 ISSN: 1359-7345 cited in the application
- CHEMICAL ABSTRACTS, vol. 74, no. 4, 25 January 1971 (1971-01-25) Columbus, Ohio, US; abstract no. 18852, BACCI, M. ET AL: "Oxomolybdenum(IV) and oxovanadium(IV) complexes with a tridentate Schiff base" XP002141499 & J. CHEM. SOC. A ( 1970 ), (18), 2964-6 ,
- CHEMICAL ABSTRACTS, vol. 114, no. 14, 8 April 1991 (1991-04-08) Columbus, Ohio, US; abstract no. 134883, EDWARDS, DENNIS A. ET AL: "Manganese(II) complexes containing the tridentate ligands 2,6-bis[1-(phenylimino)ethyl]pyridine, L1, or 2,6-bis[1-(4- methoxyphenylimino)ethyl]pyridine, L2. The molecular structures of five-coordinate [MnBr2L1] and the zinc analog [ZnCl2L1]" XP002141500 & J. CHEM. SOC., DALTON TRANS. ( 1990 ), (11), 3161-8 ,
- CHEMICAL ABSTRACTS, vol. 117, no. 6, 10 August 1992 (1992-08-10) Columbus, Ohio, US; abstract no. 61528, RUETTIMANN, STEPHANE ET AL: "Complexes of structural analogs of terpyridyl with iron and zinc;the x-ray crystal structure of bis[2,6-bis(benzimidazol-2- yl)pyridine]iron(II) trifluoromethylsulfonate bis-ethanol solvate" XP002141501 & POLYHEDRON (1992), 11(6), 635-46 ,
- REARDON ET AL: "Life and Death of an Active Ethylene Polymerization Catalyst. Ligand Involvement in Catalyst Activation and Deactivation. Isolation and Characterization of Two Unprecedented Neutral and Anionic Vanadium(I) Alkyls" STN CHEMICAL ABSTRAC, XP002132035

## Description

### FIELD OF THE INVENTION

This invention relates to olefin polymerization catalysts that are particularly suitable for use in a polymerization process for preparing polymers by polymerization of α-olefins (as used herein the term α-olefins includes ethylene) and mixtures of α-olefins. Additionally, the present invention relates to an improved olefin polymerization process useful for preparing polymers of prochiral olefins having a high degree of isotacticity and low polymer chain defect content. Such polymers possess a correspondingly high crystalline melting point.

### BACKGROUND

Metal complexes containing polydentate chelating ligands are well known in the art. Examples include complexes based on acetylacetonate (AcAc), tetramethylethylenediamine, and other polydentate chelating ligands. While such complexes with transition metals are well known in the art, seldom are such metal complexes useful as catalyst components for addition polymerizations, especially olefin polymerizations. Examples of previously known work in this field are found in WO-A-98030612, Chem. Commun., 1998, 849, JACS, 1998, 120, 4049, and elsewhere.

WO-A-98030612 discloses the preparation of polypropylene by contacting propylene with certain iron complexes of 2,6-pyridinecarboxaldehydebis(imines) or 2,6-diacylpyridinebis(imines). The complexes are:
(a) those of the Formula A: 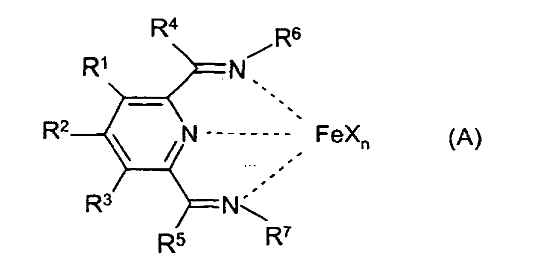 wherein:
   each X is an anion;
   n is 1, 2 or 3 so that the total number of negative charges on said anion or anions is equal to the oxidation state of the Fe atom;
   R¹, R², R³, R⁴ and R⁵ are each independently hydrogen, hydrocarbyl, substituted hydrocarbyl, or an inert functional group; and
   R⁶ and R⁷ are aryl or substituted aryl;
   in the presence of:
   (i) a first compound W, which is a neutral Lewis acid capable of abstracting X⁻ and alkyl group or a hydride group from M to form WX⁻, WR²⁰ (where R²⁰ is alkyl) or WH and which is also capable of transferring an alkyl group or a hydride to Fe, provided that WX⁻ is a weakly coordinating anion; or
   (ii) a combination of a second compound which is capable of transferring an alkyl or hydride group to M and a third compound which is a neutral Lewis acid which is capable of abstracting X, a hydride or an alkyl group from Fe to form a weakly coordinating anion;
(b) Fe(II) or Fe(III) complexes of a tridentate ligand of the Formula B 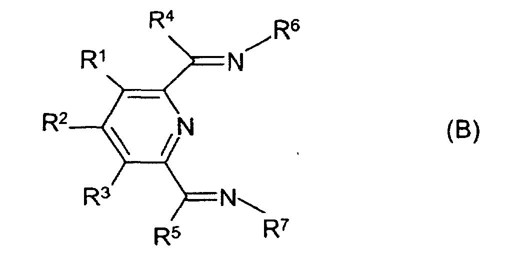 wherein R¹ to R⁷ are as defined above and provided that the Fe(II) or Fe(III) atom also has bonded to it an empty coordination site or a ligand that may be displaced by propylene and a ligand that may add to propylene.
(c) those of the Formulae C to E 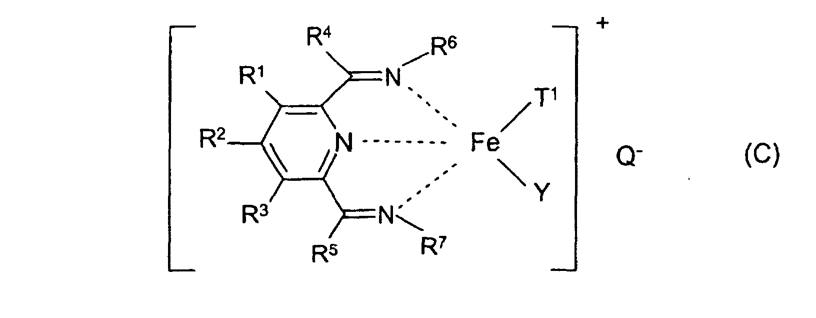 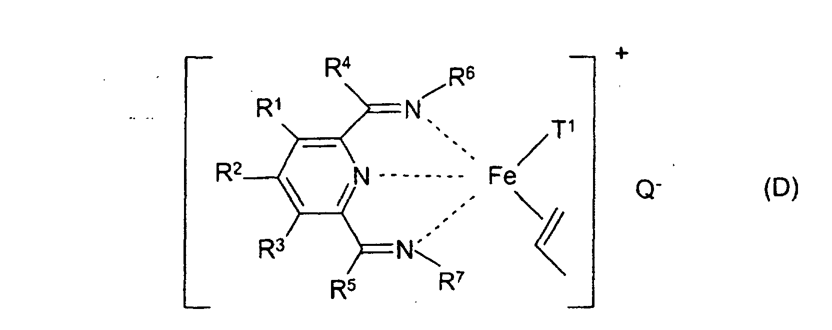 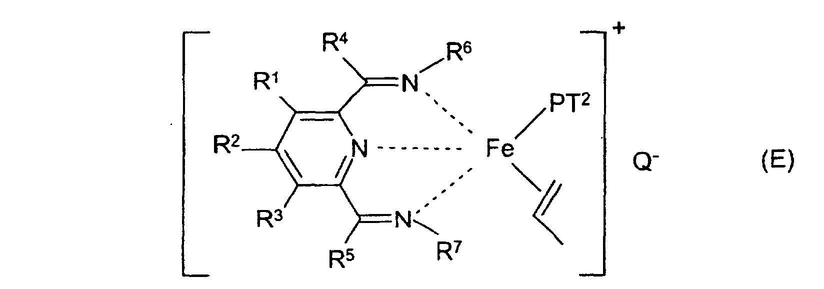 wherein
   R¹ to R⁷ are as defined above
   T¹ is hydride or alkyl or any other anionic ligand into which propylene can insert;
   Y is a neutral ligand capable of being displaced by propylene or a vacant coordination site;
   Q is a relatively non-coordinating anion;
   P is a divalent polyolefin group; and
   T² is an end group.

WO-A-9912981 discloses the (co)polymerization of olefins using a catalyst comprising a nitrogen-containing transition metal complex and an activator selected from organoaluminum and hydrocarbylboron compounds. The metal complexes are of the Formula F 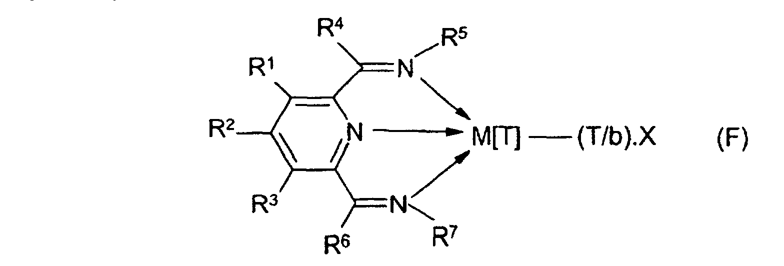 wherein
M[T] is Fe[II], Fe[III], Co[I], Co[II], Co[III], Ru[II], Ru[III], Ru[IV], Mn[I], Mn[II], Mn[III] or Mn[IV];
X is an atom or group covalently or ionically bonded to M;
T is the oxidation state of the transition metal M;
b is the valency of the atom or group X;
R¹, R², R³, R⁴, and R⁶ are independently selected from hydrogen, halogen, hydrocarbyl, substituted hydrocarbyl, heterohydrocarbyl or substituted heterohydrocarbyl and such that (1):
when M is Fe, Co or Ru, R⁵ and R⁷ are independently selected from hydrogen, halogen, hydrocarbyl, substituted hydrocarbyl, heterohydrocarbyl or substituted heterohydrocarbyl; and when any two or more of R¹ to R⁷ are hydrocarbyl, substituted hydrocarbyl, heterohydrocarbyl or substituted heterohydrocarbyl, said two or more can be linked to form one or more cyclic substituents, or such that (2):
when M is Fe, Co, Mn or Ru, then R⁵ is represented by the group "P" and R⁷ is represented by the group "Q" as follows: 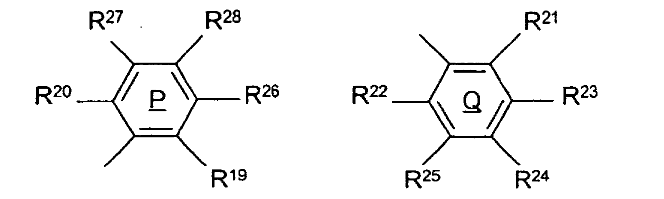 wherein R¹⁹ to R²⁸ are independently selected from hydrogen, halogen, hydrocarbyl, substituted hydrocarbyl, heterohydrocarbyl or substituted heterohydrocarbyl; when any two or more of R¹ to R⁴, R⁶ and R¹⁹ to R²⁸ are hydrocarbyl, substituted hydrocarbyl, heterohydrocarbyl or substituted heterohydrocarbyl, said two or more can be linked to form one or more cyclic substituents; with the proviso that at least one of R¹⁹, R²⁰, R²¹ and R²² is hydrocarbyl, substituted hydrocarbyl, heterohydrocarbyl or substituted heterohydrocarbyl when neither of the ring systems P and Q forms part of a polyaromatic fused-ring system, or such that (3)
when M is Fe, Co, Mn or Ru, then R⁵ is a group having the formula -NR²⁹R³⁰ and R⁷ is a group having the formula -NR³¹R³², wherein R²⁹ to R³² are independently selected from hydrogen, halogen, hydrocarbyl, substituted hydrocarbyl, heterohydrocarbyl or substituted heterohydrocarbyl; when any two or more of R¹ to R⁴, R⁶ and R²⁹ to R³² are hydrocarbyl, substituted hydrocarbyl, heterohydrocarbyl or substituted heterohydrocarbyl, said two or more can be linked to form one or more cyclic substituents.

Despite advances in the present art, there remains a need for metal complexes having improved catalytic properties. It would be advantageous to be able to produce polyolefins with improved physical properties. It would also be especially advantageous to be able to produce crystalline polyolefins, particularly crystalline, isotactic polypropylene or poly(2-butene) using polymerization catalyst compositions that give polymers of high crystallinity and few chain defects. Such polymers possess extremely high strength properties, particularly at high use temperatures.

### SUMMARY OF THE INVENTION

According to the present invention there are provided catalyst compositions comprising:
(A) metal complexes comprising a multidentate chelating ligand, said metal complexes corresponding to the Formula I: 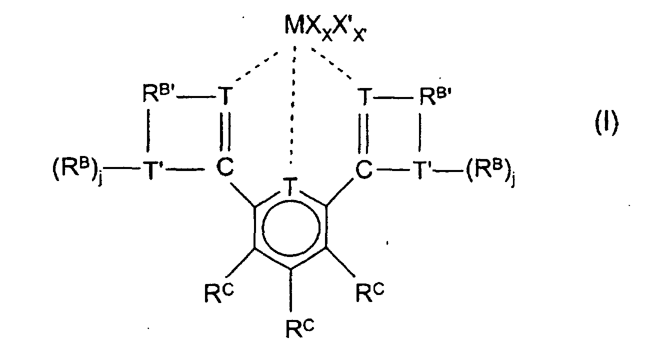 where M is a metal from one of Groups 3 to 13 of the Periodic Table of the Elements, the lanthanides or actinides;
   T is nitrogen or phosphorus;
   T' is oxygen, sulfur, nitrogen or phosphorus,
   R^{B} independently each occurrence is a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl;
   R^{B}' is a divalent ligand group having from 1 to 80 atoms not counting hydrogen and derived from hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl;
   j is 0 when T' is oxygen or sulfur and when j is 1 when T' is nitrogen or phosphorus;
   R^{C} independently each occurrence is hydrogen or a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl, or two R^{C} groups are joined together forming a divalent ligand group;
   X is an anionic ligand group having up to 60 atoms (excluding ligands that are cyclic, delocalized, π-bound ligand groups), or two X groups together form a divalent ligand group;
   X' independently each occurrence is a Lewis base ligand having up to 20 atoms;
   x is a number from 0 to 5; and
   x' is zero, 1 or 2; and
(B) a cocatalyst component comprising an activating cocatalyst wherein the molar ratio of (A) to (B) is from 1:10,000 to 100:1.

Further according to the present invention there is provided a process for the polymerization of olefins comprising contacting one or more C₂₋₂₀ α-olefins under polymerization conditions with one of the aforementioned catalyst compositions. A preferred process of this invention is a high temperature solution polymerization process for the polymerization of prochiral olefins comprising contacting one or more C₃₋₂₀ α-olefins under polymerization conditions with one of the aforementioned catalyst compositions at a temperature from 30 to 250°C, more preferably from 50 to 220°C, most preferably from 70 to 200°C.

In a further embodiment of the invention, there is provided a polymerization process for preparing isotactic polypropylene having an isotacticity as measured by ¹³C NMR triads of greater than 75 percent, preferably greater than 85 percent, more preferably greater than 95 percent comprising contacting propylene at a temperature from 50 to 220 °C, preferably from 70 to 200 °C under polymerization conditions with the foregoing catalyst composition.

Preferably, the metal, M, is a metal of Group 3 or 5-8 of the Periodic Table of the Elements.

Preferred polyolefin and polypropylene products of the process aspects of the present invention have a high degree of crystallinity and relatively few polymer chain defects.

The metal complexes of Formula I can be prepared from a corresponding multi-dentate chelating ligand corresponding to the Formula II: 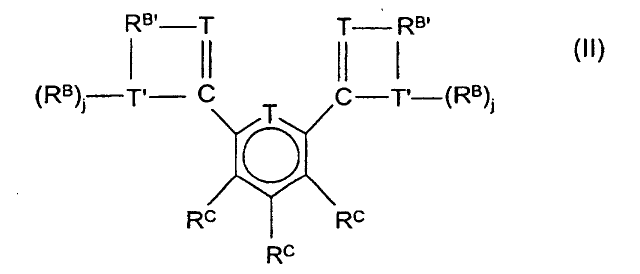 where the ligand is in the form of a free base capable of being deprotonated, a Group 1 or 2 metal salt, or a Group 2 metal halide salt.

The present catalysts and processes may be used in the solution or bulk polymerization, slurry polymerization or gas phase polymerization of ethylene/propylene (EP polymers), ethylene/octene (EO polymers), ethylene/styrene (ES polymers), propylene homopolymers, copolymers of propylene with ethylene and/or C₄₋₁₀ α-olefins, and ethylene/propylene/diene (EPDM copolymers) wherein the diene is ethylidenenorbornene, 1,4-hexadiene or similar nonconjugated diene. As previously stated, the catalysts are especially desirable for use in the polymerization of propylene to give isotactic polypropylene of high isotacticity.

The catalysts of this invention may also be supported on a support material and used in olefin polymerization processes. The catalyst may also be prepolymerized with one or more olefin monomers *in situ* in a polymerization reactor or in a separate process with intermediate recovery of the prepolymerized catalyst prior to the primary polymerization process. Highly desirably, the catalyst compositions of the present invention produce highly isotactic polymers of prochiral α-olefins, especially, propylene, having tacticity (as measured by repeat mm diads in the ¹³C NMR spectrum) of greater than 95 percent, preferably greater than 96 percent. Further uniquely, the present invented polymerization process attains such highly isotactic polymers at polymerization temperatures greater than 70 °C, preferably greater than 90 °C and the polymer has very low chain defects, preferably less than 0.1 mole percent, more preferably less than 0.01 mole percent. Such polymers are highly crystalline and have high crystalline melting points due to the uniform nature of the polymer chains.

### Detailed Description

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups. The term "comprising" when used herein with respect to a composition or mixture is not intended to exclude the additional presence of any other compound or component.

Olefins as used herein are C₂₋₂₀ aliphatic or aromatic compounds containing vinylic unsaturation, as well as cyclic compounds such as cyclobutene, cyclopentene, and norbomene, including norbornene substituted in the 5- and 6-positions with C₁₋₂₀ hydrocarbyl groups. Also included are mixtures of such olefins as well as mixtures of such olefins with C₄₋₂₀ diolefin compounds. Examples of the latter compounds include ethylidene norbomene, 1,4-hexadiene, and norbornadiene. The catalysts and processes herein are especially suited for use in preparation of ethylene/ 1-butene, ethylene/1-hexene, ethylene/styrene, ethylene/propylene, ethylene/1-pentene, ethylene/4-methyl-1-pentene and ethylene/1-octene copolymers as well as terpolymers of ethylene, propylene and a nonconjugated diene, such as, for example, EPDM terpolymers.

Preferred X groups are halide, hydrocarbyl (including alkyl, alkenyl, aryl, alkaryl, aralkyl cycloalkyl and cycloalkenyl) hydrocarbyloxide, hydrocarbylsulfide, N,N-dihydrocarbylamide, hydrocarbyleneamide, hydrocarbylcarboxylate, acetylacetonate, cyano, dithiocarbamate, and dithiocarboxylate groups, said X having from 1 to 20 atoms other than hydrogen.

Preferred X' groups are carbon monoxide; phosphines, especially trimethylphosphine, triethylphosphine, triphenylphosphine and bis(1,2-dimethylphosphino)ethane; P(ORⁱ)₃, wherein Rⁱ is hydrocarbyl, silyl or a combination thereof; ethers, especially tetrahydrofuran; amines, especially pyridine, bipyridine, tetramethylethylenediamine (TMEDA), and triethylamine; olefins; and conjugated dienes having from 4 to 40 carbon atoms. Complexes including the latter X' groups include those wherein the metal is in the +2 formal oxidation state.

Preferred coordination complexes according to the present invention are complexes corresponding to Formula I where
M is a metal of Groups 4-8; preferably titanium, vanadium, iron or chromium;
T is nitrogen;
X is chloride or C₁₋₁₀ hydrocarbyl; and
x' is zero.

More preferably independently each occurrence R⁸ is aryl or alkyl substituted aryl, and R^{c} is hydrogen.

Formation of the polydentate chelating ligands and ultimately the metal complexes themselves uses conventional organic- and organometallic- synthetic procedures. The reactions are conducted in a suitable noninterfering solvent at a temperature from -100 to 300°C, preferably from -78 to 100°C, most preferably from 0 to 50°C.

Suitable reaction media for the formation of the polydentate chelating ligands and complexes include aliphatic and aromatic hydrocarbons, ethers, and cyclic ethers, particularly branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; aromatic and hydrocarbyl-substituted aromatic compounds such as benzene, toluene, and xylene, C₁₋₄ dialkyl ethers, C₁₋₄ dialkyl ether derivatives of (poly)alkylene glycols, and tetrahydrofuran. Mixtures of the foregoing are also suitable.

The complexes are rendered catalytically active by combination with an activating cocatalyst. Suitable activating cocatalysts for use herein include polymeric or oligomeric alumoxanes, mixtures of such alumoxanes with one or more C₁₋₂₀ hydrocarbyl substituted Group 13 metal Lewis acid compounds, and mixtures of such alumoxanes or alumoxane/Lewis acid mixtures with one or more aliphatic or aromatic ethers. Preferred Lewis acids especially include tri(hydrocarbyl)aluminum- or tri(hydrocarbyl)boron- compounds and halogenated (including perhalogenated) derivatives thereof, having from 1 to 15 carbons in each hydrocarbyl or halogenated hydrocarbyl group, more especially perfluorinated tri(aryl)boron compounds, and most especially tris(o-nonafluorobiphenyl)borane, tris(pentafluorophenyl)borane; tris(o-nonafluorobiphenyl)aluminum; tris(pentafluorophenyl)aluminum, and mixtures thereof. Preferred ethers include diethyl ether and diisopropyl ether.

Suitable polymerizable monomers include ethylenically unsaturated monomers, acetylenic compounds, conjugated or non-conjugated dienes, and polyenes. Preferred monomers include olefins, for examples alpha-olefins having from 2 to 20,000, preferably from 2 to 20, more preferably from 2 to 8 carbon atoms and combinations of two or more of such alpha-olefins. Particularly suitable alpha-olefins include, for example, ethylene, propylene, 1-butene, 1-pentene, 4-methylpentene-1, 1-hexene, 1-heptene, 1-octene, 1-nonene, 1-decene, 1-undecene, 1-dodecene, 1-tridecene, 1-tetradecene, 1-pentadecene, or combinations thereof, as well as long chain vinyl terminated oligomeric or polymeric reaction products formed during the polymerization, and C₁₀₋₃₀ α-olefins specifically added to the reaction mixture in order to produce relatively long chain branches in the resulting polymers. Preferably, the alpha-olefins are ethylene, propene, 1-butene, 4-methyl-pentene-1, 1-hexene, 1-octene, and combinations of ethylene and/or propene with one or more of such other alpha-olefins. Other preferred monomers include styrene, halo- or alkyl substituted styrenes, tetrafluoroethylene, vinylchloride, vinylcyclobutene, 1,4-hexadiene, dicyclopentadiene, ethylidene norbomene, and 1,7-octadiene. Mixtures of the above-mentioned monomers may also be employed.

In general, the polymerization may be accomplished at conditions well known in the prior art for solution phase, slurry, gas phase and high pressure Ziegler-Natta or Kaminsky-Sinn type polymerization reactions. Examples of such well known polymerization processes are depicted in US-A-5,084,534, US-A-5,405,922, US-A-4,588,790, US-A-5,032,652, US-A-4,543,399, US-A-4,564,647, US-A-4,522,987, and elsewhere. Preferred polymerization pressures are from atmospheric to 3000 atmospheres (1 to 3000 bar). Molecular weight control agents can be used in combination with the present cocatalysts. Examples of such molecular weight control agents include hydrogen, silanes or other known chain transfer agents. The catalyst composition may be used by itself (homogeneously) or supported on a support material. Suitable support materials include metal halides, metal oxides, metal nitrides, metalloid oxides, metalloid carbides, clays and polymeric hydrocarbons. Preferred supports include silica, alumina, aluminosilicates, clays, borosilicates, boron nitrides, boron carbides, mixed oxides of magnesium and aluminum and/or silicon, including expanded clay materials, and the foregoing materials having residual hydroxyl groups thereof reacted with trialkyl aluminum compounds.

The catalyst composition may further comprise an electron donor compound which may interact with either the metal complex, the support, or the combination of the metal complex and support and support to give improved (greater quantity) of isospecific polymer formation. Suitable electron donors include both internal donor and external donors. Specific examples include alkyl esters- or alkyl diesters- of aromatic acids, especially C₁₋₄ alkylbenzoates, most especially ethylbenzoate, or C₁₋₄ dialkylphthalates, most especially dibutyl phthalate; and alkylsiloxanes, especially phenyl triethyloxysilane. Electron donors are previously known in the art for improved isoselective polymer formation, and have been discussed in K. Soga, et al., Prog. Polym. Sci. 22, 1503-1546, (1997), and elsewhere.

The skilled artisan will appreciate that the invention disclosed herein may be practiced in the absence of any component which has not been specifically disclosed. The following examples are provided as further illustration of the invention and are not to be construed as limiting. Unless stated to the contrary all parts and percentages are expressed on a weight basis. Where stated, the term "room temperature" refers to a temperature from 20 to 25°C, the term "overnight" refers to a time from 12 to 18 hours, and the term "mixed alkanes" refers to a mixture of propylene oligomers sold by Exxon Chemicals Inc. under the trade designation Isopar™ E.

¹H (300 MHz) and ¹³C NMR (75 MHz) spectra were recorded on a Varian XL-300 spectrometer. ¹H and ¹³C NMR spectra are referenced to the residual solvent peaks and are reported in ppm relative to tetramethylsilane. All J values are given in Hz. Tetrahydrofuran (THF), diethylether, toluene, and hexane were used following passage through double columns charged with activated alumina and catalyst (Q-5™, available from Englehardt Chemicals Inc.).. All reagents were purchased or prepared according to published techniques. All syntheses were performed under dry nitrogen or argon atmospheres using a combination of glove box and high vacuum techniques at room temperature unless indicated otherwise.

### Examples 1 - 7

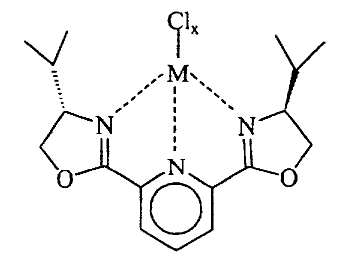

### 1. Preparation of [2,6-Bis-(4S-isopropyl-2-oxazlin-2-yl)pyridine]MnCl₂

2,6-Bis-(4S-isopropyl-2-oxazlin-2-yl)pyridine (0.400 g, 1.33 mmol) and MnCl₂ (0.167 g, 1.33 mmol) were mixed together and stirred in THF (75 mL) overnight during which time a yellow solution formed. The volatiles were then removed under vacuum and the residue extracted and filtered using CH₂Cl₂. Concentration of the solution and cooling to -10 °C overnight resulted in the isolation of a yellow microcrystalline solid (0.301 g, 53.1 percent yield).

### 2. Preparation of [2,6-Bis-(4S-isopropyl-2-oxazlin-2-yl)pyridine]CrCl₂

[2,6-Bis-(4S-isopropyl-2-oxazlin-2-yl)pyridine] (0.400 g, 1.33 mmol) and CrCl₂ (0.163 g, 1.33 mmol) were mixed together and stirred in THF (75 mL) overnight during which time a deep purple solution formed. The volatiles were then removed under vacuum and the residue extracted and filtered using CH₂Cl₂. Removal of the CH₂Cl₂ under vacuum resulted in the isolation of a purple microcrystalline solid (0.539 g, 95.8 percent yield).

### 3. Preparation of [2,6-Bis-(4S-isopropyl-2-oxazlin-2-yl)pyridine]FeCl₂

[2,6-Bis-(4S-isopropyl-2-oxazlin-2-yl)pyridine] (0.523 g, 1.74 mmole) and FeCl₂ (0.200 g, 1.58 mmole) were dissolved in 30 mL of dry THF and the mixture was then stirred for 15 hours until no detectable FeCl₂ left. The solvent was reduced to ca. 10 mL. The resulting blue crystalline solid was then filtered, washed with hexane, and dried under vacuum to give the desired product (0.630 g, 91.7 percent yield).

### 4. Preparation of [2,6-Bis-(4S-isopropyl-2-oxazlin-2-yl)pyridine]FeCl₃

[2,6-Bis-(4S-isopropyl-2-oxazlin-2-yl)pyridine] (0.204 g, 0.68 mmole) and FeCl₃ (0.100 g, 0.62 mmole) were dissolved in 30 mL of THF. The slurry was stirred for 20 hours resulting in the formation of a yellow solid. The product was isolated by filtration, washing with Et₂O, and drying under vacuum (0.240 g, 83.4 percent yield).

### 5. Preparation of [2,6-Bis-(4S-isopropyl-2-oxazlin-2-yl)pyridine]VCl₃

[2,6-Bis-(4S-isopropyl-2-oxazlin-2-yl)pyridine] (0.266 g, 0.88 mmole) and VCl₃(3THF) (0.300 g, 0.80 mmole) were dissolved in 40 mL of THF. The slurry was stirred for 20 hours resulting in the formation of a purple solid. The product was isolated by filtration, washing with Et₂O, and drying under vacuum (0.335 g, 91.0 percent yield).

### 6. Preparation of [2,6-Bis-(4S-isopropyl-2-oxazlin-2-yl)pyridine]TiCl₃

[2,6-Bis-(4S-isopropyl-2-oxazlin-2-yl)pyridine] (0.268 g, 0.89 mmole) and TiCl₃(3THF) (0.300 g, 0.81 mmole) were dissolved in 40 mL of THF. The slurry was stirred for 20 hours resulting in the formation of a blue solid. The product was isolated by filtration, washing with Et₂O, and drying under vacuum (0.320 g, 86.7 percent yield).

### 7. Preparation of [2,6-Bis-(4S-isopropyl-2-oxazlin-2-yl)pyridine]ScCl₃

[2,6-Bis-(4S-isopropyl-2-oxazlin-2-yl)pyridine] (0,329 g, 0.109 mmole) and ScCl₃ (0.15 g, 0.99 mmole) were dissolved in 30 mL of THF. The slurry was stirred for 20 hours resulting in the formation of a white solid. The product was isolated by filtration, washing with Et₂O, and drying under vacuum (0.395 g, 88.0 percent yield).

### Example 8 Preparation of [2,6-Bis-(2-benzimidazolyl)pyridine]FeCl₂

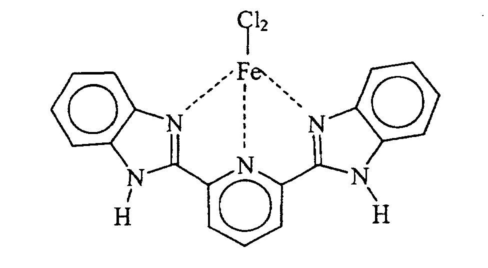

2,6-Bis-(2-benzimidazolyl)pyridine (0.540 g, 1.74 mmole) and FeCl₂ (0.200 g, 1.58 mmole) were dissolved in 30 mL of THF. The slurry was stirred for 20 hours resulting in the formation of blue solids. The microcrystalline product was isolated by filtration, washing with THF, and drying under vacuum (0.61 g, 88 percent yield).

### Polymerizations

A stirred 1-liter Parr reactor was used in the polymerizations. All feeds were passed through columns of alumina and a decontaminant (Q-5™ catalyst available from Englehardt Chemicals Inc.) prior to introduction into the reactor. Catalyst and cocatalysts are handled in a glovebox containing an atmosphere of argon or nitrogen. The reactor is charged with about 240 g of mixed alkanes solvent (Isopar E™, available from Exxon Chemicals Inc.) and 300 g of propylene and heated to the reaction temperature of 70 °C. Methylalumoxane is combined with the metal complex in toluene solution at a molar ratio of 1000:1 and allowed to stand at 25 °C for 15 minutes prior to use. The catalyst composition is transferred to a catalyst addition tank, and injected into the reactor. The polymerization conditions are maintained for 15 minutes. The resulting solution is removed from the reactor, and 10 ml of a toluene solution containing approximately 67 mg of a hindered phenol antioxidant (Irganox™ 1010 from Ciba Geigy Corporation) and 133 mg of a phosphorus stabilizer (Irgafos™ 168 from Ciba Geigy Corporation) are then added.

Polymers are recovered by drying the recovered reaction mixture in a vacuum oven set at 140 °C for about 20 hours. Polymerization results are contained in Table 1.

**Table 1**

| Run | catalyst | Efficiency (q polymer/mg metal) | Tacticity (percent mm) | Mw/Mn |
|---|---|---|---|---|
| 1 | Ex. 1 | 6.4 | - | 155,000/42,700=3.61 |
| 2 | Ex. 3 | 22.0 | 91.5 | 190,000/50,900=3.72 |
| 3 | Ex. 5 | 6.9 | - | - |
| 4 | Ex. 8 | 14.0 | 96.8 | 131,000/47,000=2.79 |
| 5 | CrCl₂ | 6.4 | - | - |

## Claims

1. A catalyst composition for olefin polymerization comprising:
(A) a metal complex comprising a multidentate chelating ligand, said metal complex corresponding to the formula: 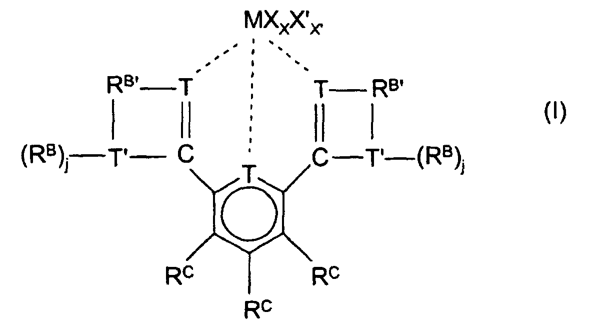 where M is a metal from one of Groups 3 to 13 of the Periodic Table of the Elements, the lanthanides or actinides;
T is nitrogen or phosphorus;
T' is oxygen, sulfur, nitrogen or phosphorus,
R^{B} independently each occurrence is a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl;
R^{B}' is a divalent ligand group having from 1 to 80 atoms not counting hydrogen and derived from hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl;
j is 0 when T is oxygen or sulfur and j is 1 when T' is nitrogen or phosphorus;
R^{C} independently each occurrence is hydrogen or a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl- substituted hydrocarbyl, or two R^{C} groups are joined together forming a divalent ligand group;
X is an anionic ligand group having up to 60 atoms (excluding ligands that are cyclic, delocalized, π-bound ligand groups), or two X groups together form a divalent ligand group;
X' independently each occurrence is a Lewis base ligand having up to 20 atoms;
x is a number from 0 to 5; and
x' is zero, 1 or 2; and
(B) an activating cocatalyst wherein the molar ratio of (A} to (B) is from 1:10,000 to 100:1.

2. The catalyst composition of claim 1, wherein M is a metal of Groups 4-8;
T is nitrogen;
X is chloride or C₁₋₁₀ hydrocarbyl; and
x' is zero.

3. The catalyst composition of claim 2 wherein R^{C} is hydrogen.

4. The catalyst composition of claim 1 wherein the metal complex is: [2,6-Bis-(4S-isopropyl-2-oxazlin-2-yl)pyridine]MnCl₂, [2,6-Bis-(4S-isopropyl-2-oxazlin-2-yl)pyridine]CrCl₂, [2,6-Bis-(4S-isopropyl-2-oxazlin-2-yl)pyridine]FeCl₂, [2,6-Bis-(4S-isopropyl-2-oxazlin-2-yl)pyridine]FeCl₃, [2,6-Bis-(4S-isopropyl-2-oxazlin-2-yl)pyridine]VCl₃, [2,6-Bis-(4S-isopropyl-2-oxazlin-2-yl)pyridine]TiCl₃ [2,6-Bis-(4S-isopropyl-2-oxazlin-2-yl)pyridine]ScCl₃, or [2,6-Bis-(2-benzimidazolyl)pyridine]FeCl₂.

5. The catalyst composition of any one of claims 1-4 wherein the activating cocatalyst is a polymeric or oligomeric alumoxane, a mixture of a polymeric or oligomeric alumoxane with one or more C₁₋₂₀ hydrocarbyl substituted Group 13 metal Lewis acid compounds, a mixture of an aliphatic or aromatic ether and a polymeric or oligomeric alumoxane, or a mixture of an aliphatic or aromatic ether, a polymeric or oligomeric alumoxane, and one or more C₁₋₂₀ hydrocarbyl substituted Group 13 metal Lewis acid compounds.

6. A process for polymerizing olefins comprising contacting one or more C₂₋₂₀ α-olefins under polymerization conditions with a catalyst composition according to any one of the preceding claims.

7. A process for preparing isotactic polypropylene comprising contacting propylene under polymerization conditions with a catalyst composition according to any one of Claims 1 to 5.

## Patentansprüche

1. Katalysatorzusammensetzung zur Olefinpolymerisation, enthaltend:
(A) einen Metallkomplelx, der einen mehrzähnigen Chelatliganden enthält, wobei dieser Metallkomplex der Formel 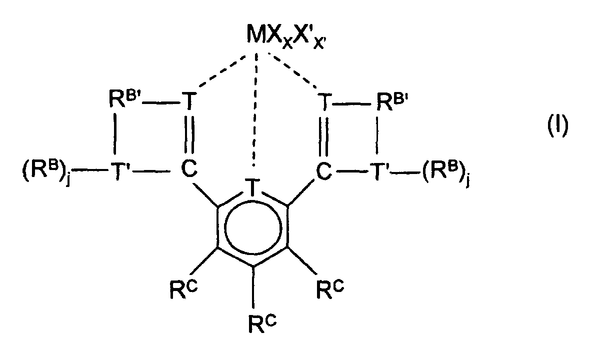 entspricht, worin M ein Metall aus einer der Gruppen 3 bis 13 des Periodensystems der Elemente, der Lanthaniden oder Actiniden ist;
T gleich Stickstoff oder Phosphor ist;
T' gleich Sauerstoff, Schwefel, Stickstoff oder Phosphor ist;
R^{B} unabhängig voneinander bei jedem Auftreten eine Gruppe mit 1 bis 80 Atomen, Wasserstoff nicht mitgezählt, ist, die Hydrocarbyl, Hydrocarbylsilyl, halogensubstituiertes Hydrocarbyl, hydrocarbyloxysubstituiertes Hydrocarbyl, hydrocarbylaminosubstituiertes Hydrocarbyl oder hydrocarbylsilylsubstituiertes Hydrocarbyl ist;
R^{B'} eine divalente Ligandengruppe mit 1 bis 80 Atomen, Wasserstoff nicht mitgezählt, ist und sich von Hydrocarbyl, Hydrocarbylsilyl, halogensubstituiertem Hydrocarbyl, hydrocarbyloxysubstituiertem Hydrocarbyl, hydrocarbylaminosubstituiertem Hydrocarbyl oder hydrocarbylsilylsubstituiertem Hydrocarbyl ableitet;
j gleich 0 ist, wenn T' gleich Sauerstoff oder Schwefel ist, und j gleich 1 ist, wenn T' gleich Stickstoff oder Phosphor ist;
R^{C} unabhängig voneinander bei jedem Auftreten Wasserstoff oder eine Gruppe mit 1 bis 80 Atomen, Wasserstoff nicht mitgezählt, ist, die Hydrocarbyl, Hydrocarbylsilyl, halogensubstituiertes Hydrocarbyl, hydrocarbyloxysubstituiertes Hydrocarbyl, hydrocarbylaminosubstituiertes Hydrocarbyl oder hydrocarbylsilylsubstituiertes Hydrocarbyl ist, oder zwei R^{C}-Gruppen miteinander verbunden sind und eine divalente Ligandengruppe bilden;
X eine anionische Ligandengruppe mit bis zu 60 Atomen (ausgenommen Liganden, die cyclische, π-gebundene Ligandengruppen mit delokalisierten Elektronen sind) ist oder zwei X-Gruppen zusammen eine divalente Ligandengruppe bilden;
X' unabhängig voneinander bei jedem Auftreten ein Lewis-Base-Ligand mit bis zu 20 Atomen ist;
x eine Zahl von 0 bis 5 ist und
x' gleich null, 1 oder 2 ist, und
(B) einen aktivierenden Cokatalysator, wobei das Molverhältnis von (A) zu (B) von 1:10.000 bis 100:1 reicht.

2. Katalysatorzusammensetzung nach Anspruch 1, worin M ein Metall der Gruppe 4-8 ist;
T gleich Stickstoff ist;
X gleich Chlorid oder C₁₋₁₀-Hydrocarbyl ist und
x' gleich null ist.

3. Katalysatorzusammensetzung nach Anspruch 2, worin R^{c} gleich Wasserstoff ist.

4. Katalysatorzusammensetzung nach Anspruch 1, worin der Metallkomplex [2,6-Bis-(4S-isopropyl-2-oxazlin-2-yl)pyridin]MnCl₂, [2,6-Bis-(4Sisopropyl-2-oxazlin-2-yl)pyridin]CrCl₂, [2,6-Bis-(4S-isopropyl-2-oxazlin-2-yl)pyridin]FeCl₂, [2,6-Bis-(4S-isopropyl-2-oxazlin-2-yl)-pyridin]FeCl₃, [2,6-Bis-(4S-isopropyl-2-oxazlin-2-yl)pyridin]VCl₃, [2,6-Bis-(4S-isopropyl-2-oxazlin-2-yl)pyridin]TiCl₃, [2,6-Bis-(4Sisopropyl-2-oxazlin-2-yl)pyridin]ScCl₃ oder [2,6-Bis-(2-benzimidazolyl)pyridin]FeCl₂ ist.

5. Katalysatorzusammensetzung nach einem der Ansprüche 1-4, worin der aktivierende Cokatalysator ein polymeres oder oligomeres Alumoxan, eine Mischung aus einem polymeren oder oligomeren Alumoxan mit einer oder mehreren C₁₋₂₀-hydrocarbylsubstituierten Gruppe-13-Metall Lewis-Säure-Verbindungen, eine Mischung aus einem aliphatischen oder aromatischen Ether und einem polymeren oder oligomeren Alumoxan oder eine Mischung aus einem aliphatischen oder aromatischen Ether, einem polymeren oder oligomeren Alumoxan und einer oder mehreren C₁₋₂₀-hydrocarbylsubstituierten Gruppe-13-Metall Lewis-Säure-Verbindungen ist.

6. Verfahren zur Polymerisation von Olefinen, umfassend Inberührungbringen eines oder mehrerer C₂₋₂₀-α-Olefine unter Polymerisationsbedingungen mit einer Katalysatorzusammensetzung nach einem der vorstehenden Ansprüche.

7. Verfahren zur Herstellung von isotaktischem Polypropylen, umfassend Inberührungbringen von Propylen unter Polymerisationsbedingungen mit einer Katalysatorzusammensetzung nach einem der Ansprüche 1-5.

## Revendications

1. Composition de catalyseur pour polymérisation d'oléfines comprenant :
(A) un complexe métallique comprenant un coordinat chélateur multidenté, ledit complexe métallique correspondant à la formule : 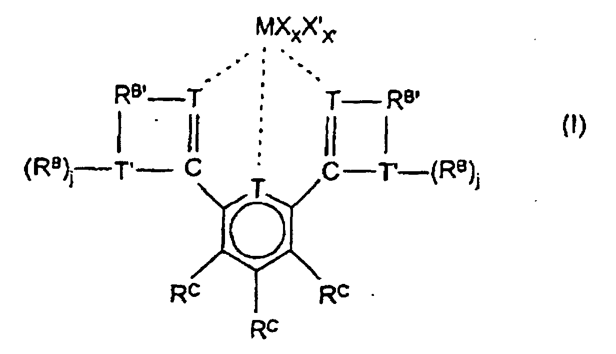 dans laquelle M représente un métal appartenant à un des Groupes 3 à 13 du Tableau Périodique des Eléments, aux lanthanides ou aux actinides ;
T représente un atome d'azote ou de phosphore,
T' représente un atome d'oxygène, de soufre, d'azote ou de phosphore,
R^{B} représente, indépendamment dans chaque occurrence, un groupe comportant de 1 à 80 atome(s) sans compter l'hydrogène, qui est un groupe hydrocarbyle, hydrocarbylsilyle, hydrocarbyle halo-substitué, hydrocarbyle hydrocarbyloxy- substitué, hydrocarbyle hydrocarbylamino-substitué, ou hydrocarbyle hydrocarbylsilyl-substitué;
R^{B'} représente un groupe coordinat divalent comportant de 1 à 80 atome(s) sans compter l'hydrogène et dérivé d'un groupe hydrocarbyle, hydrocarbylsilyle, hydrocarbyle halo-substitué, hydrocarbyle hydrocarbyloxy-substitué, hydrocarbyle hydrocarbylamino-substitué ou hydrocarbyle hydrocarbylsilyl- substitué ;
J est égal à 0 lorsque T' représente un atome d'oxygène ou de soufre et J est égal à 1 lorsque T' représente un atome d'azote ou de phosphore ;
R^{C} représente, indépendamment dans chaque occurrence, un atome d'hydrogène ou un groupe comportant de 1 à 80 atome(s) sans compter l'hydrogène, qui est un groupe hydrocarbyle, hydrocarbylsilyle, hydrocarbyle halo-substitué, hydrocarbyle hydrocarbyloxy- substitué, hydrocarbyle hydrocarbylamino-substitué ou hydrocarbyle hydrocarbylsilyl-substitué, ou deux groupes R^{c} sont joints l'un à l'autre en formant un groupe coordinat divalent ;
X représente un groupe coordinat anionique comportant jusqu'à 60 atomes (à l'exclusion des coordinats qui sont des groupes coordinats π-liés, délocalisés, cycliques) ou deux groupes X forment ensemble un groupe coordinat divalent ;
X' représente, indépendamment dans chaque occurrence, un coordinat base de Lewis comportant jusqu'à 20 atomes ;
x représente un nombre de 0 à 5; et
x' est égal à zéro, 1 ou 2 ; et
(B) un cocatalyseur d'activation,
dans laquelle le rapport molaire de (A) à (B) se situe entre 1/10 000 et 100/1.

2. Composition de catalyseur selon la revendication 1, dans laquelle M représente un métal appartenant aux Groupes 4-8 ;
T représente un atome d'azote ;
X représente un chlorure ou un groupe hydrocarbyle en C₁₋₁₀ ; et
x' est égal à zéro.

3. Composition de catalyseur selon la revendication 2, dans laquelle R^{c} représente un atome d'hydrogène.

4. Composition de catalyseur selon la revendication 1, dans laquelle le complexe métallique est :
(2-6-bis- (4S-isopropyl-2-oxazlin-2-yl)pyridine) MnCl₂,
(2,6-bis-(4S-isopropyl-2-oxazlin-2-yl)pyridine) CrCl₂,
(2,6-bis-(4S-isopropyl-2-oxazlin-2-yl)pyridine) FeCl₂,
(2,6-bis-(4S-isopropyl-2-oxazlin-2-yl)pyridine) FeCl₃,
(2,6-bis-(4S-isopropyl-2-oxazlin-2-yl)pyridine) VCl₃,
(2,6-bis-(4S-isopropyl-2-oxazlin-2-yl)pyridine) TiCl₃,
(2,6-bis-(4S-isopropyl-2-oxazlin-2-yl)pyridine) ScCl₃,
(2,6-bis-(2-benzimidazolyl)pyridine)FeCl₂.

5. Composition de catalyseur selon l'une quelconque des revendications 1 à 4, dans laquelle le cocatalyseur d'activation est un alumoxane polymère ou oligomère, un mélange d'un alumoxane polymère ou oligomère avec un ou plusieurs composés acides de Lewis comportant un métal du Groupe 13 à substitution hydrocarbyle en C₁₋₂₀, un mélange d'un éther aliphatique ou aromatique et d'un alumoxane polymère ou oligomère, ou un mélange d'un éther aliphatique ou aromatique, d'un alumoxane polymère ou oligomère et d'un ou de plusieurs composés acides de Lewis comportant un métal du Groupe 13 à substitution hydrocarbyle en C₁₋₂₀.

6. Procédé de polymérisation d'oléfines comprenant la mise en contact d'une ou plusieurs α-oléfines en C₂₋₂₀ dans des conditions de polymérisation avec une composition de catalyseur selon l'une quelconque des revendications précédentes.

7. Procédé de préparation de polypropylène isotactique comprenant la mise en contact de propylène dans des conditions de polymérisation avec une composition de catalyseur selon l'une quelconque des revendications 1 à 5.
